# EUROPÄISCHE PATENTSCHRIFT

(11) **EP 2 716 594 B1**
(45) Veröffentlichungstag und Bekanntmachung des Hinweises auf die Patenterteilung: **01.03.2017**
(21) Anmeldenummer: 13184254.4
(22) Anmeldetag: 13.09.2013
(51) Int. Cl.: B67C 7/00, B08B 9/42, B65G 47/90, B65G 47/86

(54) **Greifzange für Behälter**
Gripper for containers
Pince de préhension pour récipients

(30) Priorität: 05.10.2012 DE 102012218236
(43) Veröffentlichungstag der Anmeldung: 09.04.2014
(73) Patentinhaber: Krones AG, 93073 Neutraubling (DE)
(72) Erfinder: Knott, Josef, 93073 Neutraubling (DE); Scheuren, Hans, 93073 Neutraubling (DE)
(74) Vertreter: Grünecker Patent- und Rechtsanwälte PartG mbB

(56) Entgegenhaltungen:
- EP-A1- 2 138 434
- WO-A1-2006/103725
- DE-A1-102008 022 848
- DE-U1- 29 808 212

## Beschreibung

Die Erfindung betrifft eine Greifzange für Behälter, insbesondere Flaschen, und eine Übergabevorrichtung für Behälter umfassend erfindungsgemäße Greifzangen.

In Abfüllanlagen können zum Halten und Transportieren von Flaschen und Vorformlingen bekanntermaßen sowohl aktiv gesteuerte als auch passive Greifer eingesetzt werden. Aktive Greifer, die definitionsgemäß ein gesteuertes Öffnen und Schließen der Greifer ermöglichen, umfassen in der Regel Gelenke, Steuerelemente, Antriebe oder dergleichen, so dass an den aktiven Greifern zwangsläufig Spalte, Hinterschneidungen und ähnliche, für Reinigungsprozesse vergleichsweise schwer zugängliche Strukturen ausgebildet sind.

Beispielsweise beschreibt die DE 298 08 212 U1 eine Greifzange gemäss dem Oberbegriff des Anspruchs 1 und einen Transportstern mit Greifzangen mit U-ähnlicher Grundform, gebildet im Wesentlichen durch ein Formteil aus Federstahl. Zwei radial nach außen frei abstehende Schenkel jeder Greifzange bilden miteinander biegeelastisch verbundene, einarmige Greifhebel aus, Drehbare, abgeflachte Steuernocken liegen an der Außenseite der Greifhebel an, begrenzen dadurch die maximale Spreizung der Greifzangen und erlauben durch gesteuerte Drehung ein Schließen der jeweiligen Greifzange.

Zusätzlich zu den allgemeinen Anforderungen an aktive Greifer, wie beispielsweise hohe Lebensdauer, Beständigkeit gegen Korrosion und wirtschaftliche Herstellung, bestehen insbesondere bei aseptischen Abfüllanlagen erhöhte Anforderungen an die hygienischen Eigenschaften der Greifer, insbesondere bei deren Reinigung und Entkeimung. Dies bereitet bei bekannten aktiven Greifern aufgrund ihres komplexen Aufbaus Probleme. Es besteht somit Bedarf für aktive Greifer, die sich einfacher reinigen und zuverlässiger entkeimen lassen.

Die gestellte Aufgabe wird mit einer Greifzange für Behälter, insbesondere Flaschen, nach Anspruch 1 gelöst. Demnach umfasst diese zwei Zangenschenkel mit in einer Wirkebene beweglichen Greifabschnitten sowie mit ersten und zweiten, die Zangenschenkel jeweils elastisch miteinander verbindenden Betätigungshebeln, wobei sich die Betätigungshebel in einer von der Wirkebene abweichenden Betätigungsebene zusammen drücken und/oder auseinander spreizen lassen, um eine Materialspannung in den Zangenschenkeln zu erzeugen, die eine Bewegung der Greifabschnitte in der Wirkebene erzwingt. Die erfindungsgemäße Greifzange ist somit aktiv steuerbar.

Die Bewegung in der Wirkebene wird insbesondere dadurch erzwungen, dass mit den Betätigungshebeln auf der Innenseite der Zangenschenkel eine andere Materialspannung erzeugt wird als auf der Außenseite der Zangenschenkel. Dies bewirkt eine entlastende Ausweichbewegung der Greifabschnitte in Richtung der jeweils mit der geringeren Materialspannung beaufschlagten Seite der Zangenschenkel. Unterschiedliche Materialspannungen auf der Innenseite und Außenseite ergeben sich beispielsweise in Folge eines geeignet geformten, im Sinne der erfindungsgemäßen Spannungsausbildung wirksamen Querschnittsprofils der Zangenschenkel, insbesondere im Bereich der Greifabschnitte und/oder eines Übergangsbereichs zu den Betätigungshebeln.

Somit wird eine in der Betätigungsebene wirkende Betätigungskraft mittels einer im Querschnitt der Zangenschenkel asymmetrischen Materialspannung und der dadurch erzwungenen entlastenden Ausweichbewegung der Zangenschenkel in eine in der Wirkebene wirkenden Greifkraft umgelenkt. Die Kraftumlenkung erfolgt erfindungsgemäß gelenkfrei, also ohne Gelenkverbindung zwischen den Betätigungshebeln und den Greifabschnitten.

Ein Betätigen der erfindungsgemäßen Greifzange ist sowohl durch ein elastisches Zusammendrücken der ersten und zweiten Betätigungshebel möglich als auch durch ein elastisches Auseinanderspreizen der ersten und zweiten Betätigungshebel. Dadurch lassen sich je nach Querschnittsprofil der Greifabschnitte Greifbewegungen oder Öffnungsbewegungen der Greifzange erzeugen. Die Zangenschenkel gehen vorzugsweise am freien Ende der Betätigungshebel einstückig oder materialschlüssig ineinander über.

Das zum Greifen und/oder Öffnen der erfindungsgemäßen Greifzange nötige Lastspiel lässt sich somit ohne herkömmliche Gelenkverbindung realisieren. Die Oberflächen der erfindungsgemäßen Greifzange lassen sich entsprechend ohne schwer zugängliche Spalte, Hinterschneidungen oder dergleichen ausführen.

Vorzugsweise weisen die Greifabschnitte ein gekrümmtes und/oder abgewinkeltes Querschnittsprofil auf. Derartige Querschnitte lassen sich einfach herstellen und bewirken dennoch die an den Innenseiten und Außenseiten der Zangenschenkel benötigten unterschiedlichen Materialspannungen. Das erfindungsgemäße Querschnittsprofil der Greifabschnitte kann sich in die ersten und zweiten Betätigungshebel fortsetzen.

Die erfindungsgemäße Greifzange lässt sich daher funktionell dahingehend definieren, dass die ersten und zweiten Betätigungshebel dazu dienen, durch deren Relativbewegung in der Betätigungsebene eine Materialspannung in den Zangenschenkeln zu erzeugen. Die Greifabschnitte dienen dazu, die Materialspannung durch gezielte Entlastung in eine Ausweichbewegung in der Wirkebene umzusetzen. Ein Übergangsbereich zwischen den Betätigungshebeln und den Greifabschnitten wird dabei sowohl in der Betätigungsebene als auch in der Wirkebene elastisch verformt.

Vorzugsweise sind die Querschnittsprofile der beiden Zangenschenkel wenigstens im Bereich der Greifabschnitte im Wesentlichen zueinander konvex gekrümmt und/oder abgewinkelt, oder die Querschnittsprofile der beiden Zangenschenkel sind wenigstens im Bereich der Greifabschnitte zueinander im Wesentlichen konkav gekrümmt und/oder abgewinkelt. Dadurch lässt sich eine im Wesentlichen symmetrische Schließbewegung oder Öffnungsbewegung der beiden Zangenschenkel realisieren.

Beispielsweise bewirken zueinander konvexe Krümmungen der Zangenschenkel eine Schließbewegung in Folge eines Zusammendrückens der ersten und zweiten Betätigungshebel. Umgekehrt bewirkt ein Auseinanderspreizen der ersten und zweiten Betätigungshebel dann eine Öffnungsbewegung. Bei zueinander konkaven Krümmungen der Zangenschenkel bewegen sich diese in der Wirkebene in Folge eines Zusammendrückens der ersten und zweiten Betätigungshebel voneinander weg, und umgekehrt.

Vorzugsweise ist zwischen den Betätigungsfiebel ein in Längsrichtung der Zangenschenkel verlaufender Schlitz und/oder elastisch verformbarer und/oder biegsamer Bereich ausgebildet, insbesondere derart, dass die Betätigungsebene im Wesentlichen senkrecht auf die Wirkebene steht. Der Schlitz oder der biegsam und/oder elastisch verformbare Bereich, beispielsweise eine folienartiger Abschnitt oder dergleichen, kann mittig in den Zangenschenkeln ausgebildet sein, so dass sich die ersten und zweiten Betätigungshebel in einer Richtung im Wesentlichen senkrecht zur Wirkebene zusammendrücken und/oder auseinanderspreizen lassen. Dadurch kann eine Betätigung in im Wesentlichen vertikaler Richtung auf einfache Weise in eine horizontale Greifbewegung umgelenkt werden, oder umgekehrt. Dies vereinfacht das Greifen aufrecht stehender oder hängender Behälter in Folge einer Betätigung mittels Hubzylindern, Hubkurven oder dergleichen.

Vorzugsweise sind an den zweiten Betätigungshebeln Befestigungsmittel und an den ersten Betätigungshebeln Betätigungsmittel, insbesondere in Form von Steuerhebeln, Steuernocken, Kurvenrollen oder aktiven Stellantrieben, vorgesehen. Dies ermöglicht sowohl eine einfache Montage als auch einen einfachen und gut zu reinigenden Betätigungsmechanismus. Die Befestigungsmittel und/oder die Betätigungsmittel können stoffschlüssig mit den ersten und zweiten Betätigungshebeln verbunden sein. Dadurch lassen sich schwierig zu reinigende Spalte, Hinterschneidungen oder dergleichen im Bereich der ersten und zweiten Betätigungshebel vermeiden.

Vorzugsweise ist zwischen den Zangenschenkeln ein insbesondere austauschbarer Abstandshalter vorgesehen, um die Bewegung der Zangenschenkel in der Wirkebene zu begrenzen. Mit einem derartigen Anschlagmechanismus lassen sich beispielsweise Schließbewegungen und/oder Schließkräfte auf einfache Weise begrenzen. Mit Hilfe austauschbarer Abstandshalter lässt sich die Greifzange auf einfache Weise an unterschiedliche zu greifende Querschnitte anpassen.

Vorzugsweise sind die Zangenschenkel in einer Greifposition der Greifabschnitte federnd vorgespannt und lassen sich demgegenüber durch Zusammendrücken oder Auseinanderspreizen der ersten und zweiten Betätigungshebel öffnen. Eine Betätigungskraft zum Öffnen des erfindungsgemäßen Greifers muss dann nur an vorgegebenen Übergabepunkten für Behälter angewendet werden. Während des Greifens und des Transports der Behälter können diese mittels der Vorspannung der Greifer gehalten werden. Dadurch lassen sich Fehlfunktionen beim Greifen der Behälter mit größerer Sicherheit vermeiden. Die Greifer lassen sich dann beispielsweise mittels einer mechanischen Kurvensteuerung gezielt öffnen.

Vorzugsweise sind beide Zangenschenkel aus einem Stück gefertigt, oder deren Greifabschnitte und Betätigungshebel sind stoffschlüssig miteinander verbunden. Dadurch werden formschlüssige und/oder kraftschlüssige Verbindungen mittels Schrauben, Hinterschneidungen und dergleichen entbehrlich. Der erfindungsgemäße Greifer lässt sich daher besonders einfach und gründlich reinigen. Insbesondere die Entkeimung im Hinblick auf aseptische Anlagenbereiche ist hier in hoher Qualität möglich. Der Stoffschluss kann beispielsweise durch Schweißen oder Löten hergestellt werden. Vorzugsweise sind die Betätigungshebel ferner mit Befestigungsmitteln und/oder Betätigungsmitteln stoffschlüssig verbunden. Beispielsweise können an die Betätigungshebel Halterungen und/oder Steuerhebel mit Kurvenrollen, Steuernocken oder dergleichen geschweißt oder gelötet werden.

Bei einer bevorzugten Ausführungsform sind die Greifabschnitte als Innengreifer ausgebildet. Dies ermöglicht eine besonders einfache Übergabe an oder Übernahme von benachbarten Greifern, insbesondere an bzw. von Greifern, die als Außengreifer ausgebildet sind.

Vorzugsweise ist zwischen den Zangenschenkeln in der Wirkebene ein spitzer Winkel ausgebildet, der insbesondere nicht größer ist als 15°. Diese geometrische Einschränkung gilt dann insbesondere innerhalb des gesamten abzudeckenden Lastspiels der Greifzangen. Dadurch lässt sich die Greifbewegung in einem Bereich der linearen elastischen Formung der Zangenschenkel realisieren. Somit genügt eine geringfügige elastische Verformung der Zangenschenkel, um die geforderten Greifbewegungen auszuführen. Es lassen sich somit langlebige Greiferzangen realisieren, bei denen das geforderte Lastspiel beim Greifen und Öffnen eine vergleichsweise geringfügige Ermüdung des Materials der Greifzangen verursacht.

Vorzugsweise bestehen die Zangenschenkel aus Metallblech, insbesondere aus Edelstahlblech. Metallblech lässt sich beispielsweise durch Tiefziehen auf einfache Weise in die erfindungsgemäßen Querschnitte verformen. Edelstahlblech genügt auf besondere Weise den hygienischen Anforderungen in aseptischen Anlagenbereichen. Die geforderte Elastizität des Metallblechs kann beispielsweise durch Härten erzeugt werden.

Vorzugsweise ist die Greifzange derart ausgebildet, dass die mechanische Spannung in den Zangenschenkeln beim Zusammendrücken oder Auseinanderspreizen der ersten und zweiten Betätigungshebel 50 % der Streckgrenze der Zangenschenkel oder 50 % der 0,2-%-Dehngrenze der Zangenschenkel nicht übersteigt. Dadurch lässt sich eine ausreichende Langlebigkeit der erfindungsgemäßen Greifzange gewährleisten. Die 0,2-%-Dehngrenze lässt sich beispielsweise anhand eines Nennspannungs-Totaldehnungs-Diagramms für das Material der Zangenschenkel ermitteln.

Vorzugsweise sind an den Greifabschnitten Greifbacken zum Halten von Vorformlingen und/oder Behältern, insbesondere Getränkeflaschen, vorgesehen. Die Greifbacken können einstückig mit den Greifabschnitten ausgebildet sein. Ebenso denkbar sind angespritzte Kunststoffbacken, dicht abschließende Gummibacken oder dergleichen. Dadurch lässt sich eine einfache und gründliche Reinigung der Greifzangen gewährleisten. Die Greifbacken ermöglichen ein besonders schonendes Halten von Vorformlingen und/oder Behältern.

Die gestellt Aufgabe wird ebenso mit einer Übergabevorrichtung für Behälter, insbesondere Flaschen, nach Anspruch 14 gelöst. Demnach ist diese vom Rundläufertyp und umfasst mehrere umfänglich gleichmäßig verteilte, erfindungsgemäße Greifzangen. Eine derartige Übergabevorrichtung kann beispielsweise als Transfersternrad ausgebildet sein. Die Ansteuerung der Greifzangen kann beispielsweise mit Hilfe einer konventionellen Kurvensteuerung erfolgen. Dies ermöglicht einen einfachen und zuverlässigen Betrieb der Übergabevorrichtung und erleichtert die Reinigung der Übergabevorrichtung, insbesondere entsprechend den Vorgaben in aseptischen Anlagenbereichen.

Die gestellte Aufgabe wird ebenfalls gelöst mit einer Übergabevorrichtung für Behälter, insbesondere Flaschen, nach Anspruch 15. Demnach umfasst diese einander jeweils zugeordnete Greifzangenpaare zur Übergabe und Übernahme der Behälter, wobei die Greifzangenpaare von ersten und zweiten Greifzangen nach wenigstens einer der obigen Ausführungsformen gebildet werden, und wobei jeweils die erste Greifzange als Innengreifer und die zweite Greifzange als Außengreifer ausgebildet ist, um eine Übergabe zwischen Behandlungsstationen und/oder Sternrädern von einem Innengriff zu einem Außengriff oder umgekehrt zu ermöglichen. Dies vereinfacht die kollisionsfreie Übergabe zwischen benachbarten Sternrädern, Behandlungsanlagen oder dergleichen. Je nach Krümmung der Greifzangenschenkel lassen sich die für das Innengreifen und Außengreifen der Behälter nötigen Schließbewegungen und Öffnungsbewegungen mit im Wesentlichen gleichartigen Steuerkurven bewerkstelligen. Beispielsweise können die Zangenschenkel der ersten und zweiten Greifer jeweils mit voneinander weg weisenden Krümmungen und/oder Abwinklungen auszubilden. Durch jeweiliges Zusammendrücken der Betätigungshebel ließe sich dann der Innengriff lösen und der Außengriff schließen.

Das Zusammendrücken und/oder Auseinanderspreizen der ersten und zweiten Betätigungshebel erfolgt vorzugsweise mit Hilfe einer einstellbaren Steuereinrichtung. Beispielsweise können austauschbare Steuerkurven oder Steuernocken vorgesehen sein und/oder eine elektronische Programmierung zugeordneter Stellantriebe, um ein gefordertes Lastspiel zum Schließen und Öffnen der Greifzangen einzustellen.

Bevorzugte Ausführungsformen der Erfindung sind in der Zeichnung dargestellt. Es zeigen:
- Fig. 1: eine perspektivische Ansicht einer erfindungsgemäßen Greifzange;
- Fig. 2: einen schematischen Querschnitt durch die Zangenschenkel einer erfindungsgemäßen Greifzange;
- Fig. 3: einen schematischen Querschnitt durch die Zangenschenkel einer alternativen Ausführungsform einer erfindungsgemäßen Greifzange;
- Fig. 4: eine Draufsicht und eine Schrägansicht einer erfindungsgemäßen Übergabevorrichtung für Behälter; und
- Fig. 5: einen schematischen Schnitt durch eine weitere erfindungsgemäße Übergabevorrichtung.

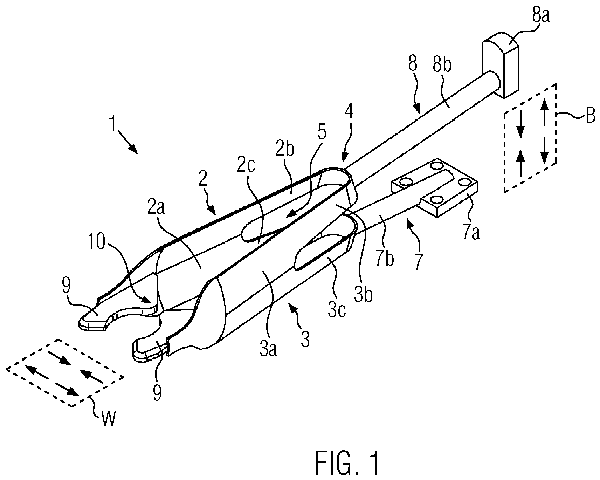

Wie die Fig. 1 erkennen lässt, umfasst eine bevorzugte Ausführungsform 1 der erfindungsgemäßen Greifzange zwei Zangenschenkel 2, 3, an deren freien, vorderen Enden in einer mit Bewegungspfeilen schematisch angedeuteten Wirkebene W bewegliche Greifabschnitte 2a, 3a ausgebildet sind. An ihren entgegen gesetzten, hinteren Enden gehen die Zangenschenkel 2, 3 in einem in der Wirkebene W federelastisch verformbaren Verbindungsbereich 4 ineinander über, beispielsweise indem sie aus einem Stück gefertigt oder stoffschlüssig verbunden sind.

In den Zangenschenkeln 2, 3 ist ferner in deren Längsrichtung ein Schlitz 5 ausgebildet, der die hinteren Bereiche der Zangenschenkel 2, 3 in erste, im Beispiel obere Betätigungshebel 2b, 3b und zweite, im Beispiel untere Betätigungshebel 2c, 3c trennt. Der Schlitz 5 ist derart ausgebildet, dass sich die ersten Betätigungshebel 2b, 3b gemeinsam in Richtung der zweiten Betätigungshebel 2c, 3c drücken und/oder von diesen weg ziehen lassen.

Sowohl durch ein elastisches Zusammendrücken der ersten Betätigungshebel 2b, 3b und der zweiten Betätigungshebel 2c, 3c als auch durch ein entgegen gesetztes elastisches Auseinanderspreizen in einer schematisch mit Bewegungspfeilen angedeuteten Betätigungsebene B kann in den Zangenschenkeln 2, 3 eine mechanische Spannung erzeugt werden, die eine Entlastungsbewegung der Greifabschnitte 2a, 3a in der Wirkebene W erzwingt. Der Schlitz 5 könnte auch durch ein elastisches und/oder biegsames Material ersetzt werden, beispielsweise eine Folie oder dergleichen. Der Schlitz 5 könnte prinzipiell auch schräg in Längsrichtung der Zangenschenkel 2, 3 verlaufen und/oder eine von der Darstellung abweichende Form und/oder Größe aufweisen.

Die bevorzugte Ausführungsform 1 der erfindungsgemäßen Greifzange umfasst ferner ein mit den zweiten Betätigungshebeln 2c, 3c verbundenes Befestigungsmittel 7, beispielsweise umfassend eine Montageplatte 7a und einen Auslegerarm 7b, sowie ein mit den ersten Betätigungshebeln 2b, 3b verbundenes Betätigungsmittel 8, beispielsweise umfassend einen Steuernocken 8a und einen Betätigungsarm 8b.

An den Greifabschnitten 2a, 3a sind ferner Greifbacken 9 zum Halten von Behältern und/oder Vorformlingen vorgesehen. Zur Begrenzung von Schließbewegungen der Zangenschenkel 2, 3 ist optional wenigstens ein Abstandshalter 10 zwischen den Zangenschenkeln 2, 3 vorgesehen. Abstandshalter 10 lassen sich beispielsweise als mechanischer Anschlag in die Greifbacken 9 integrieren oder als auswechselbare Stifte oder dergleichen an den Zangenschenkeln 2, 3 ausbilden, um die Begrenzung von Schließbewegungen an unterschiedliche Behälterabmessungen anpassen zu können.

Das Betätigungsmittel 8 wird vorzugsweise in einer senkrecht auf die Wirkebene W stehenden Betätigungsebene B ausgelenkt. Je nach Betätigungsmechanismus sind prinzipiell jedoch auch davon abweichende Betätigungsrichtungen denkbar, beispielsweise im Rahmen nichtlinearer Schwenkbewegungen.

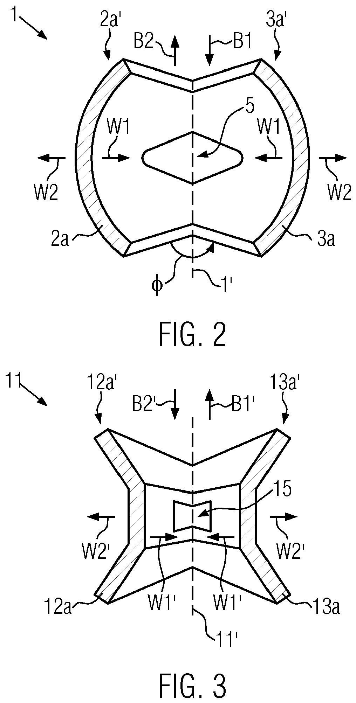

Die Ausweichbewegung oder Entlastungsbewegung der Greifabschnitte 2a, 3a wird mit Hilfe der in den Figuren 2 und 3 beispielhaft dargestellten Querschnitte der Greifabschnitte erzeugt. Durch das Betätigen der Betätigungshebel wird an der Außenseite der Zangenschenkel jeweils eine andere Materialspannung erzeugt als an deren Innenseite. Eine in der Betätigungsebene B an den Betätigungshebeln wirkende Kraft B1, B2 wird somit gelenkfrei in eine in der Wirkebene W wirkende Schließkraft W1 bzw. Öffnungskraft W2 umgesetzt.

Die Fig. 2 zeigt die beiden Zangenschenkel der Fig. 1 von vorne in Richtung auf den Schlitz 5. Die Zangenschenkel 2, 3 sind im Bereich der Greifabschnitte 2a, 3a geschnitten, so dass deren konvex zueinander, nach außen gewölbte Querschnitte 2a', 3a' zu erkennen sind. Diese sind im Wesentlichen achsensymmetrisch bezüglich einer die Wirkebene W lotrecht schneidenden Hilfslinie 1' angeordnet. Diese entspricht im Wesentlichen einer gedachten Schwenkachse im Bereich des federelastischen Verbindungsbereichs 4, um die sich die Greifabschnitte 2a, 3a aufeinander zu oder voneinander weg schwenken lassen. Demnach bewirkt ein Zusammendrücken der ersten und zweiten Betätigungshebel 2b, 3b, 2c, 3c in der Betätigungsebene B, dass sich die Greifabschnitte 2a, 3a in der Wirkebene W aufeinander zu bewegen, und umgekehrt.

Perspektivisch verzerrt ist ferner ein Öffnungswinkel φ angedeutet, der zwischen den Zangenschenkeln 2, 3 in der Wirkebene W ausgebildet ist. Bei bevorzugten Ausführungsformen beträgt dieser höchstens 15°. Dadurch wird das für ein Schließen oder Öffnen der erfindungsgemäßen Greifzange 1 nötige Lastspiel mit vergleichsweise geringfügiger linearelastischer Verformung erzielt.

In der Fig. 3 ist eine weitere bevorzugte Ausführungsform 11 der erfindungsgemäßen Greifzange dargestellt, die sich von der ersten Ausführungsform 1 im Wesentlichen dadurch unterscheidet, dass die Querschnittsprofile 12a' und 13a' der Greifabschnitte 12a, 13a bezüglich der gedachten Mittellinie 11' zueinander konkav abgewinkelt ausgebildet sind. Dies bewirkt eine Schließkraft W1' bzw. Öffnungskraft W2' durch gegenüber der ersten Ausführungsform jeweils entgegen gesetzte Betätigungskräfte B1', B2'.

Die in den Fig. 2 und 3 schematisch dargestellten Umlenkung der Betätigungskräfte B1, B2, B1', B2' in die Schließkraft W1, W1' bzw. Öffnungskraft W2, W2' lassen sich generell mit paarweise konvex oder konkav gekrümmten Querschnitten, mit paarweise konvex oder konkav gewinkelten Querschnitten oder mit beliebigen Kombinationen aus derartigen Querschnitten erzielen. Vorzugsweise sind jeweils zwei im Wesentlichen achsensymmetrisch bezüglich der gedachten Mittellinien 1', 11' ausgebildete Greifabschnitte 2a, 3a, 12a, 13a vorgesehen. Anders gesagt werden jeweils im Wesentlichen konvex gekrümmte und/oder gewinkelte Greifabschnitte 2a, 3a miteinander kombiniert oder jeweils im Wesentlichen konkav gekrümmte und/oder gewinkelte Greifabschnitte 12a, 13a.

Je nach bevorzugter Betätigungsrichtung und je nach Verwendung als Innengreifer oder Außengreifer lassen sich geeignete Greifbewegungen oder Öffnungsbewegungen der erfindungsgemäßen Greifzange durch geeignete Kombination von Querschnittsprofilen 2a', 3a', 12a', 13a', Öffnungswinkeln φ und Längen der Zangenschenkel 2, 3 erzielen. Hierbei wird die Greifzange 1, 11 derart dimensioniert, dass das Material der Zangenschenkel beim geforderten Lastspiel zumindest innerhalb des Bereich linearer elastischer Verformung bleibt, vorzugsweise derart, dass die Materialspannung 50 % der 0,2-%-Dehngrenze nicht übersteigt.

Hierbei ist es ebenso denkbar, dass die erfindungsgemäße Greifzange 1, 11 einen Behälter im unbelasteten Zustand, also ohne Einwirken von Betätigungskräften B1, B2, B1', B2' greift, somit in ihrer Greifstellung federnd vorgespannt ist, und dem gegenüber durch Zusammendrücken oder Auseinanderspreizen der ersten und zweiten Betätigungshebel 2b, 3b, 2c, 3c geöffnet wird. In diesem Fall wäre die erfindungsgemäße Greifzange nur kurzfristig für ein Bestücken mit einem Behälter oder beim Entnehmen des Behälters mit Betätigungskräften B1, B2, B1', B2' zu belasten. Dadurch ließe sich der Behälter besonders zuverlässig halten. Außerdem wäre eine gegebenenfalls vorgesehene Kurvensteuerung nur in den Bereichen des Behältereinlaufs und Behälterauslaufs notwendig.

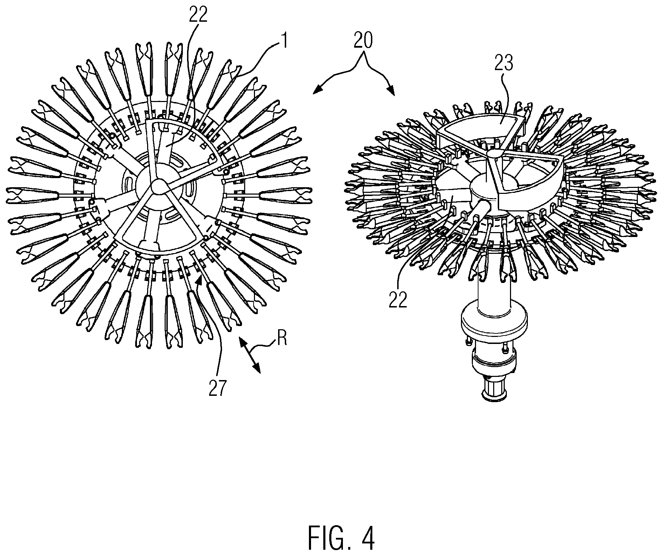

In der Fig. 4 ist eine bevorzugte Ausführungsform einer erfindungsgemäßen Übergabevorrichtung 20 dargestellt, bei der eine Vielzahl erfindungsgemäßer Greifzangen 1 umfänglich gleichmäßig verteilt mit Hilfe von armförmigen Befestigungsmitteln 27 an einem Drehtisch 22 befestigt sind. Die Greifzangen 1 können hierbei jeweils radial verschiebbar an den Befestigungsmitteln 27 gelagert sein. Dies ist in der Fig. 4 durch einen Doppelpfeil R angedeutet. Ebenso angedeutet ist eine Halterung 23 für eine Steuerkurve, mit der die Greifzangen 1 geschlossen oder geöffnet werden. In gleicher Weise lassen sich Greifzangen 1 radial verschieben.

Anstelle einer Kurvensteuerung können bei allen beschriebenen Ausführungsformen auch individuelle Antriebe zum Betätigen der einzelnen Greifzangen 1 vorgesehen sein. Denkbar sind z. B. elektrische, pneumatische oder hydraulische Antriebe. Derartige Antriebe könnten beispielsweise unmittelbar auf die ersten Betätigungshebel 2b, 3b einwirken oder auf die Betätigungsarme 8b.

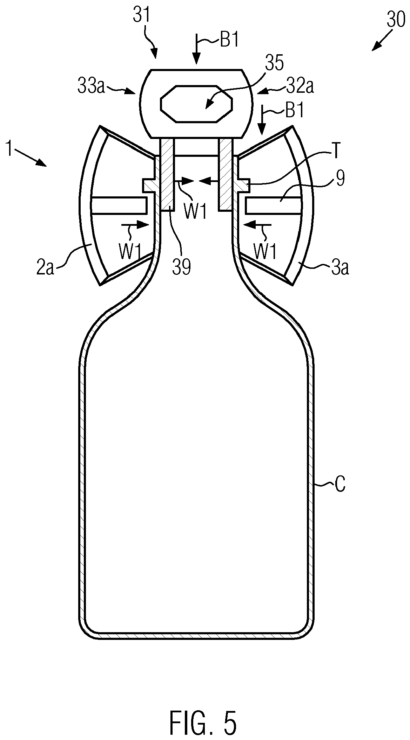

In der Fig. 5 ist eine weitere bevorzugte Ausführungsform 30 einer erfindungsgemäßen Übergabevorrichtung dargestellt, die eine Übergabe eines Behälters C mittels eines miteinander korrespondierenden Greifzangenpaars, nämlich von einer ersten Greifzange 31 an eine zweite Greifzange 1, ermöglicht. Die erste Greifzange 31 ist beispielsweise an einem ersten Sternrad (nicht dargestellt) gelagert, die zweite Greifzange 1 an einem im Produktstrom nachfolgenden zweiten Sternrad (nicht dargestellt). Die erste Greifzange 31 ist demnach als Innengreifer ausgebildet, bei dem der Behälter C von an der Innenwand des Behälters anliegenden Greifbacken 39 gehalten wird. Die erste Greifzange 31 ist von hinten gesehen dargestellt, also ausgehend von einem erfindungsgemäßen Schlitz 35 in Richtung von Greifabschnitten 32a, 33a der ersten Greifzange 31. Diese sind in Anlehnung an die erste Ausführungsform 1 der erfindungsgemäßen Greifzange mit zueinander konvex geformten Querschnitten ausgebildet. Entsprechend bewirkt ein Niederdrücken der oberen Betätigungshebel mit der Betätigungskraft B1 ein Zusammenbewegen der Greifbacken 39 in Richtung der Pfeile W1 und somit ein Lösen des Innengriffs.

Die zweite Greifzange 1 entsprechend der ersten Ausführungsform ist von vorne gesehen dargestellt, also von den Greifbacken 9 ausgehend in Richtung des in der Fig. 5 verdeckten Schlitzes 5. Auch bei der zweiten Greifzange 1 bewirkt ein Niederdrücken der jeweils oberen Betätigungshebel 2b, 3b mit der Betätigungskraft B1 ein Zusammenbewegen der Greifbacken 9 in Richtung der Pfeile W1 und somit ein Schließen des Außengriffs der Greifbacken 9.

Die ersten und zweiten Greifzangen 31, 1 bilden somit ein Greifzangenpaar, das eine Übergabe zwischen Behandlungsstationen und/oder Sternrädern von einem Innengriff zu einem Außengriff ermöglicht. Dies wäre ebenso in umgekehrter Reihenfolge möglich. Hierbei könnten die ersten oder zweiten Greifzangen 31, 1 bei der Übergabe der Behälter C einen (nicht dargestellten) Hub ausführen, um die erste Greifzange 31 vollständig aus der Behälteröffnung ziehen zu können. Ebenso wäre es denkbar, die zweite Greifzange 1 so weit unterhalb eines an dem Behälter C vorgesehenen Tragrings T zu platzieren, dass der Behälter C nach dem Lösen des Innengriffs vollständig von der ersten Greifzange 31 herunter rutscht und dabei von den noch nicht vollständig geschlossenen Greifbacken 9 seitlich geführt wird, bis der Tragring T schließlich auf den Greifbacken 9 aufliegt. Unmittelbar anschließend könnte der Außengriff der zweiten Greifzange 1 hergestellt werden. Ein zusätzlicher Hub von Greifzangen bei der Behälterübergabe wäre dann entbehrlich.

Um die Reinigung und Entkeimung der erfindungsgemäßen Greifzange 1 zu erleichtern, sind die Zangenschenkel 2, 3 vorzugsweise aus einem Stück gefertigt. Beispielsweise lassen sich die Zangenschenkel 2, 3 mit dem Schlitz 5 auf einfache Weise durch Stanzen und Tiefziehen eines Metallblechs herstellen. Die Greifbacken 9 könnten beispielsweise stoffschlüssig mit den Zangenschenkeln 2, 3 verbunden werden, ebenso die Befestigungsmittel 7 und die Betätigungsmittel 8. Es wäre auch denkbar, die Zangenschenkel 2, 3 als separate Halbschalen auszubilden und die beiden Zangenschenkel 2, 3 im Bereich der elastischen Verbindung 4 stoffschlüssig zu verbinden, beispielsweise durch Schweißen oder Löten.

Die Abstandshalter 10 könnten im Bereich der Greifbacken 9 ausgebildet sein oder beispielsweise als separate Stifte zwischen den Zangenschenkeln 2, 3 eingesetzt werden. Derartige Stifte ließen sich auf einfache Weise austauschen, so dass die erfindungsgemäßen Greifzangen 1, 11 auf einfache Weise an unterschiedliche Behälterdurchmesser und Greifkräfte angepasst werden können.

Der Öffnungswinkel φ von höchstens 15° zwischen den Zangenschenkeln 2, 3 ermöglicht ein Greifen bei nur geringfügiger elastischer Verformung der Zangenschenkel 2, 3. Dadurch ist ein langlebiger Betrieb der erfindungsgemäßen Greifzangen 1, 11 gewährleistet. Insbesondere wird der Öffnungswinkel φ und die Länge der Zangenschenkel 2, 3 derart aufeinander abgestimmt, dass die mechanische Spannung bei der größtmöglichen Auslenkung zum Greifen oder Öffnen der erfindungsgemäßen Greifzange 1, 11 50 % der Streckgrenze oder 50 % der 0,2 % Dehngrenze er Zangenschenkel nicht übersteigt. Die Streckgrenze und die 0,2 % Dehngrenze sind Materialkonstanten, die sich für Metalle, insbesondere Edelstahl mit bekannten Standardverfahren ermitteln lassen.

Die Greifbacken 9 können als auswechselbare Formteile ausgebildet sein, beispielsweise aus einem Kunststoff, Gummi, Silikon oder einem Verbundmaterial aus diesen Werkstoffen. Damit lässt sich eine spaltfreie Befestigung der Greifbacken 9 an den Zangenschenkeln 2, 3 realisieren. Dadurch kann eine gründliche Reinigung und Entkeimung der erfindungsgemäßen Greifzange 1, 11 auch hinsichtlich der Anforderungen in aseptischen Produktionsanlagen gewährleistet werden.

Mit der erfindungsgemäßen Greifzange 1, 11 lässt sich eine Umlenkung einer vorzugsweise vertikal ausgerichteten Betätigung in eine horizontal ausgerichtete Greifbewegung ohne Gelenkverbindung beweglicher Greifelemente realisieren. Dadurch kann die in aseptischen Produktionsbereichen geforderte Reinigung und Entkeimung der Greifzangen 1, 11 zuverlässig gewährleistet werden. Aufgrund einer im linearen elastischen Bereich liegenden Verformung der Zangenschenkel 2, 3 eignet sich die erfindungsgemäße Greifzange 1, 11 für einen langlebigen Dauereinsatz. Zudem lässt sich die erfindungsgemäße Greifzange 1, 11 kostengünstig herstellen.

## Patentansprüche

1. Greifzange (1, 11, 31) für Behälter (C), insbesondere Flaschen, umfassend zwei Zangenschenkel (2, 3) mit in einer Wirkebene (W) beweglichen Greifabschnitten (2a, 3a; 12a, 13a; 32a, 33a), **dadurch gekennzeichnet, dass** die zwei Zangenschenkel erste (2b, 3b) und zweite (2c, 3c), die Zangenschenkel jeweils elastisch miteinander verbindenden Betätigungshebel aufweisen, wobei sich die Betätigungshebel (2b, 3b, 2c, 3c) in einer von der Wirkebene abweichenden Betätigungsebene (B) zusammen drücken und/oder auseinander spreizen lassen, um eine Materialspannung in den Zangenschenkeln zu erzeugen, die eine Bewegung der Greifabschnitte in der Wirkebene bewirkt.

2. Greifzange nach Anspruch 1, wobei die Greifabschnitte (2a, 3a; 12a, 13a; 32a, 33a) ein gekrümmtes und/oder abgewinkeltes Querschnittsprofil (2a', 3a') aufweisen.

3. Greifzange (1, 11) nach Anspruch 2, wobei die Querschnittsprofile (2a', 3a') der beiden Greifabschnitte (2a, 3a) im Wesentlichen zueinander konvex gekrümmt und/oder abgewinkelt sind, oder wobei die Querschnittsprofile (12a', 13a') der beiden Greifabschnitte (12a, 13a) zueinander im Wesentlichen konkav gekrümmt und/oder abgewinkelt sind.

4. Greifzange nach wenigstens einem der vorigen Ansprüche, wobei zwischen den Betätigungshebeln (2b, 3b, 2c, 3c) ein in Längsrichtung der Zangenschenkel (2, 3) verlaufender Schlitz (5) und/oder elastisch verformbarer und/oder biegsamer Bereich ausgebildet ist, insbesondere derart, dass die Betätigungsebene (B) im Wesentlichen senkrecht auf die Wirkebene (W) steht.

5. Greifzange nach wenigstens einem der vorigen Ansprüche, wobei an den zweiten Betätigungshebeln (2c, 3c) Befestigungsmittel (7) und an den ersten Betätigungshebeln (2b, 3b) Betätigungsmittel (8), insbesondere umfassend Steuernocken (8a), Steuerhebeln 8b), Kurvenrollen oder aktiven Stellantrieben, vorgesehen sind.

6. Greifzange nach wenigstens einem der vorigen Ansprüche, wobei zwischen den Zangenschenkeln (2, 3) wenigstens ein, insbesondere austauschbarer, mechanischer Abstandshalter (10) vorgesehen ist, um die Bewegung der Zangenschenkel in der Wirkebene (W) zu begrenzen.

7. Greifzange nach wenigstens einem der vorigen Ansprüche, wobei die Zangenschenkel (2, 3) in einer Greifposition der Greifabschnitte federnd vorgespannt sind und sich die Greifzange demgegenüber durch Zusammendrücken oder Auseinanderspreizen der ersten und zweiten Betätigungshebel (2b, 3b, 2c, 3c) öffnen lässt.

8. Greifzange nach wenigstens einem der vorigen Ansprüche, wobei beide Zangenschenkel (2, 3) aus einem Stück gefertigt sind oder die Greifabschnitte (2a, 3a) mit den ersten und zweiten Betätigungshebeln (2b, 2c, 3b, 3c) stoffschlüssig verbunden sind.

9. Greifzange (31) nach wenigstens einem der vorigen Ansprüche, wobei die Greifabschnitte (32a, 33a) als Innengreifer ausgebildet sind.

10. Greifzange nach wenigstens einem der vorigen Ansprüche, wobei zwischen den Zangenschenkeln (2, 3) in der Wirkebene (W) ein spitzer Winkel (φ) ausgebildet ist, der insbesondere nicht größer ist als 15°.

11. Greifzange nach wenigstens einem der vorigen Ansprüche, wobei die Zangenschenkel (2, 3) aus Metallblech bestehen, insbesondere aus Edelstahlblech.

12. Greifzange nach wenigstens einem der vorigen Ansprüche, wobei die Greifzange derart ausgebildet ist, dass die mechanische Spannung in den Zangenschenkeln (2, 3) beim Schließen und/oder Öffnen der Greifzange 50% der Streckgrenze der Zangenschenkel oder 50% der 0,2-%-Dehngrenze der Zangenschenkel nicht übersteigt.

13. Greifzange nach wenigstens einem der vorigen Ansprüche, wobei an den Greifabschnitten (2a, 3a) Greifbacken (9) zum Halten von Vorformlingen und/oder Behältern, insbesondere Getränkeflaschen, vorgesehen sind.

14. Übergabevorrichtung (20) für Behälter (C), insbesondere Flaschen, vom Rundläufertyp und mit mehreren umfänglich gleichmäßig verteilten Greifzangen (1) nach wenigstens einem der vorigen Ansprüche.

15. Übergabevorrichtung (30) für Behälter (C), insbesondere Flaschen, mit einander zugeordneten Greifzangenpaaren zur Übergabe und Übernahme der Behälter, wobei die Greifzangenpaare von ersten und zweiten Greifzangen nach wenigstens einem der Ansprüche 1 bis 7 und 9 bis 13 gebildet werden, und wobei jeweils die erste Greifzange (31) als Innengreifer und die zweite Greifzange (1) als Außengreifer ausgebildet ist, um eine Übergabe zwischen Behandlungsstationen und/oder Sternrädern von einem Innengriff zu einem Außengriff oder umgekehrt zu ermöglichen.

## Claims

1. Gripper (1, 11, 31) for containers (C), particularly bottles, comprising two pliers limbs (2, 3) with gripping portions (2a, 3a; 12a, 13a; 32a, 33a) movable in a plane of action (W), **characterized in that** the two pliers limbs comprise first (2b, 3b) and second (2c, 3c) actuation levers respectively interconnecting the pliers limbs elastically, wherein the actuation levers (2b, 3b, 2c, 3c) can be compressed and/or spread apart in an actuation plane (B) differing from the plane of action to produce material stress in the pliers limbs so as to move the gripping portions in the plane of action.

2. Gripper according to claim 1, wherein the gripping portions (2a, 3a; 12a, 13a; 32a, 33a) have a curved and/or bent cross-sectional profile (2a', 3a').

3. Gripper (1, 11) according to claim 2, wherein the cross-sectional profiles (2a', 3a') of the two gripping portions (2a, 3a) are substantially convexly curved and/or bent relative to one another, or wherein the cross-sectional profiles (12a', 13a') of the two gripping portions (12a, 13a) are substantially concavely curved and/or bent relative to one another.

4. Gripper according to at least one of the preceding claims, wherein the actuation levers (2b, 3b, 2c, 3c) have formed thereinbetween a slit (5) extending in longitudinal direction of the pliers limbs (2, 3) and/or an elastically deformable and/or bendable region, especially such that the actuation plane (B) is substantially perpendicular to the plane of action (W).

5. Gripper according to at least one of the preceding claims, wherein fastening means (7) are provided on the second actuation levers (2c, 3c) and actuating means (8), particularly comprising control cams (8a), control levers (8b), cam rollers or active actuators, on the first actuation levers (2b, 3b).

6. Gripper according to at least one of the preceding claims, wherein at least one, particularly exchangeable, mechanical spacer (10) is provided between the pliers limbs (2, 3) to limit the movement of the pliers limbs in the plane of action (W).

7. Gripper according to at least one of the preceding claims, wherein the pliers limbs (2, 3) are resiliently biased into a gripping position of the gripping portions and the gripper can be opened in relation thereto by compressing or spreading apart the first and second actuation levers (2b, 3b, 2c, 3c).

8. Gripper according to at least one of the preceding claims, wherein both pliers limbs (2, 3) are made from one piece, or the gripping portions (2a, 3a) are materially connected to the first and second actuation levers (2b, 2c, 3b, 3c).

9. Gripper according to at least one of the preceding claims, wherein the gripping portions (32a, 33a) are formed as internal grippers.

10. Gripper according to at least one of the preceding claims, wherein an acute angle (φ) which is particularly not greater than 15° is formed between the pliers limbs (2, 3) in the plane of action (W).

11. Gripper according to at least one of the preceding claims, wherein the pliers limbs (2, 3) consist of metal sheet, particularly of stainless steel sheet.

12. Gripper according to at least one of the preceding claims, wherein the gripper is configured such that the mechanical stress in the pliers limbs (2, 3) during closing and/or opening of the gripper does not exceed 50% of the yield strength of the pliers limbs or 50% of the 0.2% proof stress of the pliers limbs.

13. Gripper according to at least one of the preceding claims, wherein gripping jaws (9) for holding preforms and/or containers, particularly beverage bottles, are provided on the gripping portions (2a, 3a).

14. Transfer device (20) for containers (C), particularly bottles, of the rotary machine type and having a plurality of circumferentially evenly distributed grippers (1) according to at least one of the preceding claims.

15. Transfer device (30) for containers (C), particularly bottles, with pairs of grippers assigned to each other, for the transfer and receipt of the containers, wherein the pairs of grippers are formed by first and second grippers according to at least one of claims 1 to 7 and 9 to 13, and wherein the first gripper (31) is respectively formed as an internal gripper and the second gripper (1) as an external gripper to allow transfer between treatment stations and/or star wheels from an internal grip to an external grip, or vice versa.

## Revendications

1. Pince de préhension (1, 11, 31) pour contenants (C), notamment des bouteilles, comprenant deux branches de pince (2, 3) avec des tronçons de préhension (2a, 3a ; 12a, 13a ; 32a, 33a) mobiles dans un plan d'action (W),
**caractérisée**
**en ce que** les deux branches de pince présentent des premiers (2b, 3b) et deuxièmes (2c, 3c) leviers d'actionnement reliant respectivement de manière élastique les branches de pince, les leviers d'actionnement (2b, 3b, 2c, 3c) étant susceptibles d'être rapprochés et/ou écartés l'un de l'autre dans un plan d'actionnement (B) différent du plan d'action, en vue d'engendrer une contrainte de matériau dans les branches de pince, qui produit un mouvement de déplacement des tronçons de préhension dans le plan d'action.

2. Pince de préhension selon la revendication 1, dans laquelle les tronçons de préhension (2a, 3a ; 12a, 13a ; 32a, 33a) présentent un profil de section transversale (2a', 3a') courbe et/ou coudé.

3. Pince de préhension (1, 11) selon la revendication 2, dans laquelle les profils de section transversale (2a', 3a') des deux tronçons de préhension (2a, 3a) sont courbés et/ou coudés de manière sensiblement convexe l'un par rapport à l'autre, ou bien dans laquelle les profils de section transversale (12a', 13a') des deux tronçons de préhension (12a, 13a) sont courbés et/ou coudés de manière sensiblement concave l'un par rapport à l'autre.

4. Pince de préhension selon l'une au moins des revendications précédentes, dans laquelle entre les leviers d'actionnement (2b, 3b, 2c, 3c) est formée une fente (5) s'étendant dans la direction longitudinale des branches de pince (2, 3) et/ou une zone déformable élastiquement et/ou flexible, notamment de manière telle que le plan d'actionnement (B) soit sensiblement perpendiculaire au plan d'action (W).

5. Pince de préhension selon l'une au moins des revendications précédentes, dans laquelle sur les deuxièmes leviers d'actionnement (2c, 3c) sont prévus des moyens de fixation (7) et sur les premiers leviers d'actionnement (2b, 3b) sont prévus des moyens d'actionnement (8), comprenant notamment des cames de commande (8a), des leviers de commande (8b), des galets de came ou des entraînements de déplacement actifs.

6. Pince de préhension selon l'une au moins des revendications précédentes, dans laquelle entre les branches de pince (2, 3) est prévue au moins une entretoise d'espacement (10) mécanique, notamment interchangeable, pour limiter le mouvement des branches de pince dans le plan d'action (W).

7. Pince de préhension selon l'une au moins des revendications précédentes, dans laquelle les branches de pince (2, 3) sont précontraintes de manière élastique dans une position de préhension des tronçons de préhension, et la pince de préhension peut en revanche être ouverte par rapprochement ou écartement des premiers et deuxièmes leviers d'actionnement (2b, 3b, 2c, 3c).

8. Pince de préhension selon l'une au moins des revendications précédentes, dans laquelle les deux branches de pince (2, 3) sont fabriquées d'un seul tenant, ou bien les tronçons de préhension (2a, 3a) sont reliés par continuité de matière avec les premiers et deuxièmes leviers d'actionnement (2b, 3b, 2c, 3c).

9. Pince de préhension (31) selon l'une au moins des revendications précédentes, dans laquelle les tronçons de préhension (32a, 33a) sont réalisés sous forme de préhenseurs intérieurs.

10. Pince de préhension selon l'une au moins des revendications précédentes, dans laquelle entre les branches de pince (2, 3), dans le plan d'action (W) est formé un angle aigu (φ), qui, notamment, n'est pas plus grand que 15°.

11. Pince de préhension selon l'une au moins des revendications précédentes, dans laquelle les branches de pince (2, 3) sont réalisées en une tôle de métal, notamment en une tôle d'acier surfin inoxydable.

12. Pince de préhension selon l'une au moins des revendications précédentes, dans laquelle la pince de préhension est configurée de façon à ce que la contrainte mécanique dans les branches de pince (2, 3), lors de la fermeture et/ou de l'ouverture de la pince de préhension, ne dépasse pas 50% de la limite élastique des branches de pince ou 50% de la limite élastique conventionnelle à 0,2%.

13. Pince de préhension selon l'une au moins des revendications précédentes, dans laquelle sur les tronçons de préhension (2a, 3a) sont prévus des mors de préhension (9) pour assurer le maintien de préformes et/ou de contenants, notamment de bouteilles de boissons.

14. Dispositif de transfert (20) pour contenants (c), notamment des bouteilles, du type à plateau tournant et comportant plusieurs pinces de préhension (1) selon l'une au moins des revendications précédentes, qui sont réparties de manière uniforme sur la périphérie.

15. Dispositif de transfert (30) pour contenants (c), notamment des bouteilles, avec des paires de pinces de préhension mutuellement associées pour transférer et reprendre les contenants, dans laquelle les paires de pinces de préhension sont formées par des premières et des deuxièmes pinces de préhension selon l'une au moins des revendications 1 à 7 et 9 à 13, et dans laquelle respectivement la première pince de préhension (31) est réalisée en tant que préhenseur intérieur et la deuxième pince de préhension (1) en tant que préhenseur extérieur, en vue de permettre un transfert entre des postes de traitement et/ou des roues en étoile, d'une préhension intérieure à une préhension extérieure ou inversement.
